(19) Europäisches Patentamt
European Patent Office
Office européen des brevets

(11) **EP 3 336 649 B1**

(12) **FASCICULE DE BREVET EUROPEEN**

(45) Date de publication et mention
de la délivrance du brevet:
**18.03.2020 Bulletin 2020/12**

(51) Int Cl.:
*G05D 1/08* (2006.01)    *B64C 13/18* (2006.01)
*B64C 13/04* (2006.01)    *B64C 13/50* (2006.01)
*B64C 27/57* (2006.01)

(21) Numéro de dépôt: **17202857.3**

(22) Date de dépôt: **21.11.2017**

(54) **PROCEDE DE COMMANDE DE VOL POUR GIRAVION, ET GIRAVION**

FLUGSTEUERUNGSVERFAHREN FÜR DREHFLÜGELFLUGZEUG, UND
DREHFLÜGELFLUGZEUG

FLIGHT CONTROL METHOD FOR ROTORCRAFT, AND ROTORCRAFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.12.2016 FR 1601793**

(43) Date de publication de la demande:
**20.06.2018 Bulletin 2018/25**

(73) Titulaire: **Airbus Helicopters**
**13725 Marignane Cedex (FR)**

(72) Inventeurs:
• **BLANC, Frédéric**
**13330 PELISSANNE (FR)**
• **MEZAN, Serge**
**13960 SAUSSET LES PINS (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**US-A- 3 920 966**

• **ITOH ERI ET AL: "Evaluation on novel
architecture for harmonizing manual and
automatic flight controls under atmospheric
turbulence", AEROSPACE SCIENCE AND
TECHNOLOGY, ELSEVIER MASSON, FR, vol. 24,
no. 1, 25 novembre 2011 (2011-11-25), pages
241-254, XP028983870, ISSN: 1270-9638, DOI:
10.1016/J.AST.2011.11.012**

**Description**

La présente invention concerne un procédé de commande de vol pour giravion.

La présente invention est notamment du domaine des giravions, et relève plus particulièrement des systèmes de commande de vol partiellement automatisés influant sur le comportement en vol du giravion.

Un giravion présente au moins un rotor principal qui participe au moins partiellement à la sustentation de l'aéronef.

Un giravion peut alors comprendre des organes de commande entraînés par un pilote humain pour piloter le pas des pales du ou des rotors par l'intermédiaire de chaînes cinématiques de commande. La notion de « manuelle » est à considérer en opposition à la notion « d'automatique », sans préjuger du moyen utilisé par l'homme pour manœuvrer le giravion, palonnier, manette, manche, levier, commande tactile ou vocale notamment.

Sur un hélicoptère classique muni d'un rotor principal et d'un rotor de contrôle du mouvement en lacet, un levier dit « de pas collectif » permet à un pilote de contrôler le pas collectif des pales du rotor principal. Un manche dit « cyclique » permet à un pilote de contrôler cycliquement le pas des pales du rotor principal, et un palonnier permet à un pilote de contrôler collectivement le pas des pales du rotor de contrôle du mouvement en lacet.

En outre, le giravion peut comprendre un pilote automatique. Le pilote automatique est générateur d'ordres automatisés de commande.

Suivant une première forme de réalisation d'un giravion, les organes de commande sont en prise sur des chaînes mécaniques de transmission de commande reliées aux pales des rotors. Ces chaînes mécaniques de transmission de commande permettent au pilote du giravion de manœuvrer mécaniquement les pales à partir des organes de commande, soit directement soit par l'intermédiaire de servocommandes.

Le cas échéant, un pilote automatique peut alors contrôler des vérins agencés sur les chaînes mécaniques de transmission de commande. Dès lors, ces vérins peuvent être déplacés par les organes de commande, mais sont commandés uniquement par le pilote automatique. Seul le pilote automatique peut requérir un changement d'état du vérin. L'expression « changement d'état » fait référence à un mouvement d'un organe du vérin par rapport à un autre organe de ce vérin. Ainsi, un pilote automatique peut requérir un changement d'état prenant la forme d'une rétraction ou d'une extension du vérin dans le cadre d'un vérin linéaire, d'une rotation d'une tige dans le cadre d'un vérin rotatif.....

Suivant une deuxième forme de réalisation d'un giravion, un entraînement de l'organe de commande par le pilote est générateur de signaux électriques d'activation d'au moins un actionneur de manœuvre des pales. Un tel actionneur peut par exemple être relié mécaniquement à un distributeur hydraulique d'une servocommande.

Une unité de calcul est interposée à cet effet entre les organes de commande et les actionneurs. Cette unité de calcul peut élaborer des ordres transmis aux actionneurs en fonction des signaux émis par les organes de commande. De plus, cette unité de calcul peut comporter un module faisant office de pilote automatique.

Quelle que soit la réalisation, les ordres donnés par un pilote automatique sont de deux types.

Selon des modes de base de pilotage automatique, le pilote automatique peut en effet générer des ordres pour stabiliser l'aéronef en contrôlant notamment des angles d'assiette.

Selon des modes supérieurs de pilotage automatique, le pilote automatique peut générer des ordres pour tenir une trajectoire.

A titre illustratif, un mode de base peut viser à maintenir un angle de roulis de l'aéronef égal à zéro. De façon plus évoluée, un mode supérieur peut tendre à contrôler l'aéronef pour voler à une altitude donnée, pour se déplacer à une vitesse de consigne...

Dans le cas où le pilote humain n'agit pas sur les organes de commande, les ordres donnés par les modes de base du pilote automatique visent à tenir des paramètres de vols égaux à des consignes. Dans les cas où des modes supérieurs de pilotage automatique sont activés, les ordres donnés par le pilote automatique permettent de contrôler des trajectoires plus sophistiquées comme des approches automatiques par exemple.

En cas d'action du pilote humain sur un organe manuel de commande suivant un axe donné de pilotage (longitudinal, latéral, collectif et/ou lacet), les ordres donnés par le pilote automatique visent à agir seulement au niveau de la stabilité de l'aéronef et des découplages. Dans le cas d'organes de commande mettant en œuvre des lois de pilotage par objectifs, le pilote humain peut contrôler directement certains états de l'appareil, pendant que le pilote automatique stabilise l'aéronef. Mais dans tous les cas, toutes les aides de tenue automatique, notamment les aides des modes supérieurs sur l'axe correspondant, sont désactivées lorsque le pilote humain manœuvre un organe manuel de commande. Lorsque le pilote humain relâche son action, les modes supérieurs peuvent à nouveau tenir leurs consignes, mais après un délai nécessaire pour juger de la fin de l'action pilotée et pour réinitialiser correctement la trajectoire. Durant ce laps de temps, l'appareil reste sans tenue de la trajectoire de référence, ce qui peut occasionner des dérives par rapport à cette référence.

Dans certains cas de vol où le pilote n'appréhende pas correctement l'environnement extérieur (cas des vols en vision dégradée par exemple), ou encore où le pilote a une charge de travail très élevée, cette logique de fonctionnement peut être problématique.

Par exemple, lorsque la mission demande d'effectuer un vol stationnaire de nuit au-dessus d'un bateau, le pilote peut ne pas avoir des retours visuels suffisants pour tenir le vol stationnaire dans de bonnes conditions de charge de travail et/ou de sécurité. Ce pilote peut donc enclencher un mode de pilotage automatique de tenue de vol stationnaire. Cependant, si le pilote interagit avec le mode de pilotage automatique de tenue de vol stationnaire à l'aide d'un organe de commande, de façon volontaire s'il désire apporter une correction de position ou même de façon involontaire, cette interaction suspend le mode de pilotage automatique de tenue de vol stationnaire et risque de générer des dérives de position potentiellement problématiques par rapport aux obstacles.

Par ailleurs, le document FR2771071 décrit un dispositif pour actionner un organe de commande sur un aéronef à voilure tournante. Ce document présente des lois de pilotage par objectif.

En effet, un organe de commande peut générer non pas un ordre de manœuvre d'une servocommande mais un objectif. Cet objectif est alors converti par un module d'asservissement en ordre de manœuvre d'un actionneur pour tenir un objectif. Par exemple, le mouvement d'un manche est transformé en un objectif de vitesse, le module d'asservissement contrôlant un actionneur pour tenir cet objectif de vitesse.

Par ailleurs, certains aéronefs peuvent comporter un mini-manche manœuvré par un opérateur lors d'un treuillage par exemple, pour moduler transitoirement des vitesses sol de référence.

Le document US 9308985 vise un système pour permettre à un aéronef d'atteindre une position de vol stationnaire.

Pour que l'aéronef rallie une position de vol stationnaire en acquérant des vitesses sol latérale et longitudinale nulles, l'aéronef peut appliquer un profil prédéterminé de décélération. Un pilote peut en outre moduler la décélération de l'aéronef en manœuvrant un manche. Dès lors, ce manche peut être manœuvré longitudinalement pour modifier une décélération de l'aéronef selon un axe longitudinal de l'aéronef et latéralement pour modifier une décélération de l'aéronef selon un axe latéral de l'aéronef.

Autrement dit, le pilote peut générer des ordres relatifs à des accélérations selon deux axes, pour finalement atteindre une position stationnaire, et donc atteindre une vitesse nulle.

Le document US 3920966 décrit un système de commande de vol d'aéronef. L'aéronef comporte un manche de pas cyclique relié mécaniquement à une servocommande. Cette servocommande est reliée à un ensemble de plateaux cycliques via un actionneur. Dans ce système, un indicateur est pourvu d'un bouton pour régler une consigne de vitesse. La vitesse courante mesurée par un capteur est soustraite à une consigne de vitesse pour produire un signal d'erreur transmis à un limiteur.

Le signal d'erreur limité est déduit par un circuit soustracteur d'un signal d'attitude qui provient d'un gyroscope. Ce signal d'attitude est alors traité par un organe de traitement (« washout »). Il en résulte une consigne de pas cyclique ajoutée à une dérivée de pas cyclique pour commander l'actionneur après traitement (filtre passe-haut, limiteur, amplificateur).

Le document ITOH ERI ET AL « Evaluation on novel architecture for harmonizing manual and automatic flight controls under atmospheric turbulence », AEROSPCE SCIENCE AND TECHNOLOGY, ELSEVIER MASSON, FR, vol. 24, n°1, 25 novembre 2011 est aussi connu. Ce document décrit une architecture pour harmoniser des commandes de vol manuelle et automatique face à des turbulences atmosphériques. En cas de commande de vol simultanée manuelle et automatique, afin d'éviter qu'un pilote humain ne désengage inutilement le pilotage automatique, cette architecture s'impose à la fois aux autorités de commande manuelle et automatique. Un filtre de Kalman étendu (EKF) est évalué en situation de turbulences afin d'en évaluer la robustesse.

Le but de la présente invention est d'obtenir un procédé de commande de vol pour giravion innovant, ce procédé prévoyant des commandes partiellement automatisées lorsqu'un mode de tenue de trajectoire est enclenché.

L'invention concerne donc un procédé selon la revendication 1.

Selon ce procédé une première consigne de trajectoire est émise. Par exemple, le premier paramètre de vol peut être la vitesse sol longitudinale de l'aéronef, et la consigne de trajectoire spécifie que cette vitesse sol longitudinale doit atteindre 40 x 0,514444 m/s (i.e. 40 nœuds).

Dès lors, un module de pilotage automatique génère automatiquement une première commande de pilotage automatique pour atteindre à terme cet objectif. Un tel module de pilotage automatique peut prendre la forme d'un calculateur indépendant ou d'une partie d'un calculateur, par exemple un segment de code. Ce module de pilotage automatique est dénommé plus simplement pilote automatique. Selon l'exemple précédant, l'aéronef ne peut pas nécessairement atteindre directement la première consigne de trajectoire établie. Dès lors, durant une boucle de régulation cette première consigne de trajectoire est transformée automatiquement en une consigne intermédiaire dite « première commande de pilotage automatique » selon un modèle prédéterminé dit « premier modèle mathématique de pilotage automatique ».

Le terme « modèle » désigne tout moyen prédéterminé permettant d'effectuer la transformation requise. Un tel modèle peut par exemple comprendre une base de données, une courbe, au moins une relation mathématique...

L'invention se situe donc dans le cadre d'un guidage automatique d'un giravion. Cependant de manière innovante, le procédé permet à un pilote d'influer sur la trajectoire suivie, sans déconnecter le mode de guidage automatique engagé.

Ainsi, un pilote peut solliciter un organe de commande, tel qu'un manche, un levier, un palonnier, un système de commande vocal ou tactile voire visuel... Selon le premier type d'interfaçage, cette sollicitation induit la création automatique d'une première consigne pilote homogène à la première consigne de trajectoire.

L'expression « homogène » signifie que les variables concernées sont relatives à la même entité physique, par exemple une vitesse de l'aéronef selon un axe longitudinal. Ainsi, la consigne pilote représente une valeur de décalage du premier paramètre de vol, visant à déplacer l'état où se trouvera le giravion lorsque le premier paramètre de vol atteindra la première consigne de trajectoire.

A l'instar de la première consigne de trajectoire, la première consigne pilote est automatiquement transformée en une première commande de pilotage humain. L'action du pilote sur un organe de commande est ainsi convertie en objectif de pilotage élaboré pour se coupler avec la tenue automatique du premier paramètre de vol.

Cette première commande de pilotage humain est non pas substituée mais combinée automatiquement à la première commande de pilotage automatique pour élaborer une première commande de trajectoire hybride. Par exemple, cette première commande de trajectoire résulte de la sommation de composantes de la première commande de pilotage automatique et des composantes correspondantes de la première commande de pilotage humain.

La première commande de trajectoire hybride est alors utilisée, de manière par exemple usuelle, pour générer automatiquement des commandes transmis à des actionneurs en fonction de l'état courant du giravion. En particulier, la première commande de trajectoire hybride peut présenter diverses composantes relatives à divers paramètres, les commandes étant élaborées automatiquement en fonction des valeurs courantes mesurées de ces divers paramètres.

En particulier, un module d'asservissement émet un ordre visant à modifier l'état d'un actionneur et non pas à le déplacer. Eventuellement, un actionneur peut comporter un corps et un arbre de sortie, le module d'asservissement émettant un ordre pour que l'actionneur change d'état en déplaçant ledit arbre de sortie par rapport au corps. Par exemple, le module d'asservissement commande un actionneur linéaire pour étendre ou rétracter l'actionneur en fonction de la première commande de trajectoire et de l'état courant du giravion. Selon un autre exemple, le module d'asservissement commande un actionneur rotatif pour engendrer une rotation de l'arbre de sortie de cet actionneur.

Ce procédé permet ainsi de fournir un système de guidage au moins partiellement automatisé permettant de superposer l'action du pilote sur un organe de commande et la tenue de paramètres de trajectoire par un pilote automatique. Ce procédé autorise ainsi un interfaçage en pilotage entre la loi de pilotage par objectifs associée à un organe de commande, et les tenues automatiques de trajectoire notamment des modes supérieurs du pilote automatique.

En particulier, l'objectif de pilotage est homogène au paramètre tenu par au moins un mode de guidage automatique enclenché. Par exemple, si un mode supérieur engagé du pilote automatique tient un profil de vitesse latérale sol Vysol et donc de trajectoire sol sur l'axe latéral de l'aéronef, la loi de pilotage par objectifs va permettre à un pilote de contrôler directement cette même vitesse latérale sol Vysol. La commande de trajectoire générée par le système sur l'axe latéral de l'aéronef est la somme de la première commande de pilotage automatique générée par les tenues automatiques du pilote automatique, et de la première commande de pilote humain générée par un pilote. Le pilote a ainsi la possibilité de décaler, éventuellement proportionnellement à son action sur son organe de commande, la vitesse latérale sol. Un pilote peut ainsi gérer la trajectoire tout en conservant la phase de de pilotage automatique active.

Lorsque le pilote lâche l'organe de commande, le pilote automatique est actif immédiatement puisque ce pilote automatique n'a jamais été suspendu, et donc sans phase de réinitialisation.

Autre exemple, lors du suivi automatique d'un profil de vitesse verticale, la loi de pilotage par objectifs peut permettre de décaler la vitesse verticale autour de la trajectoire verticale contrôlée automatiquement.

L'invention permet donc à un pilote d'agir sur la trajectoire de l'aéronef sans modification des consignes de pilotage automatique. Le système de commande de vol peut donc permettre à un pilote de gérer la trajectoire tenue par un pilote automatique, en particulier en décalant un paramètre de vol tenu.

Ce procédé peut de plus comporter une ou plusieurs des caractéristiques qui suivent.

Ainsi, la première consigne de trajectoire peut être paramétrée par un pilote humain.

L'aéronef peut comprendre une interface de pilote automatique usuelle permettant d'établir la valeur de la première consigne de trajectoire en vol. Par exemple, une telle interface peut prendre la forme d'un écran tactile, d'une molette, d'un bouton....

Selon un autre aspect, la première commande de pilotage automatique peut comprendre au moins une première composante associée à une dérivée seconde du premier paramètre de vol, une deuxième composante associée à une dérivée première du premier paramètre de vol, et une troisième composante associée au premier paramètre de vol.

En outre, la première commande de pilotage humain peut comprendre au moins une première composante associée à une dérivée seconde du premier paramètre de vol, une deuxième composante associée à une dérivée première du premier paramètre de vol, et une troisième composante associée au premier paramètre de vol.

La première commande de trajectoire peut comprendre au moins une première composante combinant la première composante de la première commande de pilotage automatique et la première composante de la première commande de pilotage humain, une deuxième composante combinant la deuxième composante de la première commande de pilotage automatique et la deuxième composante de la première commande de pilotage humain, et une troisième composante combinant la troisième composante de la première commande de pilotage automatique et la troisième composante de la première commande de pilotage humain.

L'ordre transmis à au moins un actionneur peut alors être déterminé par le module d'asservissement à partir d'au moins la première commande de trajectoire et d'au moins une valeur courante dudit premier paramètre de vol, une valeur courante de la dérivée première du premier paramètre de vol et une valeur courante de la dérivée seconde du premier paramètre de vol.

Selon un autre aspect, l'étape de génération automatique d'une commande de pilotage automatique peut comporter les étapes suivantes :

- transformation de la première consigne de trajectoire en une valeur de consigne automatique d'une dérivée seconde du premier paramètre de vol par application du premier modèle mathématique de pilotage automatique, une première composante de la première commande de pilotage automatique étant matérialisée par cette valeur de consigne automatique d'une dérivée seconde du premier paramètre de vol,

- établissement d'une valeur de consigne automatique d'une dérivée première du premier paramètre de vol par intégration de ladite valeur de consigne automatique d'une dérivée seconde du premier paramètre de vol, une deuxième composante de la première commande de pilotage automatique étant matérialisée par cette valeur de consigne automatique d'une dérivée première du premier paramètre de vol,

- établissement d'une valeur de consigne automatique dudit premier paramètre de vol par intégration de ladite valeur de consigne automatique d'une dérivée première du premier paramètre de vol, une troisième composante de la première commande de pilotage automatique étant matérialisée par cette valeur de consigne automatique du premier paramètre de vol.

Le premier modèle mathématique de pilotage automatique peut comprendre un profil de variation de la première consigne de trajectoire.

Selon une autre solution, l'étape de transformation de la première consigne de trajectoire en une valeur de consigne automatique d'une dérivée seconde du premier paramètre de vol est réalisée par application d'un filtre passe bas du deuxième ordre.

Par exemple, cette étape de transformation est réalisée par application de la relation suivante :

$$\ddot{X}coma_n = 2 * \delta * \omega 0 * \left[ (Xcons - Xcoma_{n-1}) * \frac{\omega 0}{2 * \delta} - \dot{X}coma_{n-1} \right]$$

où « $\ddot{X}coma_n$ » représente la valeur de consigne automatique de la dérivée seconde du premier paramètre de vol au pas de calcul courant, « $\delta$ » représente l'amortissement prédéterminé du filtre, « $\omega 0$ » représente la fréquence de coupure prédéterminée du filtre, « Xcons » représente la consigne de trajectoire, « $Xcoma_{n-1}$ » représente la valeur de consigne automatique du premier paramètre de vol au pas de calcul précédant le pas de calcul courant, « $\dot{X}coma_{n-1}$ » représente la valeur de consigne automatique de la dérivée première du premier paramètre de vol au pas de calcul précédant le pas de calcul courant.

L'étape de génération automatique d'une première commande de pilotage automatique peut comporter une étape de bornage de la valeur de consigne automatique d'une dérivée seconde du premier paramètre de vol.

Cette étape vise à éviter un déplacement trop violent de l'aéronef.

Par exemple, l'étape de bornage est réalisée en bornant l'expression suivante :

$$(Xcons - Xcoma_{n-1}) * \frac{\omega 0}{2 * \delta}$$

Selon un autre aspect, l'étape de génération d'une commande de pilotage humain peut comporter les étapes suivantes :

- transformation de la première consigne pilote en une valeur de consigne humaine d'une dérivée seconde du premier paramètre de vol, une première composante de la première commande de pilotage humain étant matérialisée par cette valeur de consigne humaine d'une dérivée seconde du premier paramètre de vol,

- établissement d'une valeur de consigne humaine d'une dérivée première du premier paramètre de vol par intégration de ladite valeur de consigne humaine d'une dérivée seconde du premier paramètre de vol, une deuxième composante de la première commande de pilotage humain étant matérialisée par cette valeur de consigne humaine d'une dérivée première du premier paramètre de vol,

- établissement d'une valeur de consigne humaine du premier paramètre de vol par intégration de ladite valeur de consigne humaine d'une dérivée première du premier paramètre de vol, une troisième composante de la première commande de pilotage humain étant matérialisée par cette valeur de consigne humaine du premier paramètre de vol.

Le premier modèle mathématique peut comprendre un profil de variation de la première consigne pilote.

Selon une autre solution, l'étape de transformation de la première consigne pilote en une valeur de consigne humaine d'une dérivée seconde du premier paramètre de vol est réalisée par application d'un filtre passe bas du deuxième ordre.

Par exemple, l'étape de transformation de la consigne de pilotage en une dérivée seconde de la première consigne de pilotage est réalisée par application de la relation suivante :

$$\ddot{X}comp_n = \left\lfloor (Xpil - Xcomp_{n-1}) * \omega0p^2 - 2 * \delta p * \omega0p * \dot{X}comp_{n-1} \right\rfloor$$

où « $\ddot{X}comp_n$ » représente la valeur de consigne humaine de la dérivée seconde du premier paramètre de vol au pas de calcul courant, « $\delta p$ » représente l'amortissement prédéterminé du filtre, « $\omega0p$ » représente la fréquence de coupure prédéterminée du filtre, « $Xpil$ » représente la première consigne pilote, « $Xcomp_{n-1}$ » représente la valeur de consigne humaine du premier paramètre de vol au pas de calcul précédant le pas de calcul courant, « $\dot{X}comp_{n-1}$ » représente la valeur de consigne humaine de la dérivée première du premier paramètre de vol au pas de calcul précédant le pas de calcul courant.

Par ailleurs, le procédé permet de suivre lors d'un suivi de trajectoire au moins deux objectifs de guidage distincts.

Ce deuxième objectif peut être tenu en appliquant le premier type d'interfaçage précédemment décrit. Néanmoins, le procédé peut prévoir un deuxième type d'interfaçage différent.

Ainsi, pour au moins un deuxième type d'interfaçage, ledit procédé comporte :

- une étape de génération d'une deuxième consigne de trajectoire, la deuxième consigne de trajectoire représentant une valeur à atteindre par un deuxième paramètre de vol,

- une étape de génération automatique d'une deuxième commande de pilotage automatique à partir de ladite deuxième consigne de trajectoire en appliquant un deuxième modèle mathématique de pilotage automatique prédéterminé,

- une étape de génération d'une deuxième consigne pilote durant laquelle un déplacement dudit organe de commande est transformé par un deuxième modèle de pilotage par objectif en une deuxième consigne pilote, ladite deuxième consigne pilote et une dérivée première du deuxième paramètre de vol étant homogènes en étant exprimées dans une même unité de mesure,

- une étape de génération d'une deuxième commande de pilotage humain à partir de la deuxième consigne pilote en appliquant un deuxième modèle mathématique de pilotage humain prédéterminé,

- une étape de génération d'une deuxième commande de trajectoire en combinant ladite deuxième commande de pilotage automatique et ladite deuxième commande de pilotage humain,

- une étape de commande pour commander au moins un dit actionneur durant laquelle au moins un ordre est transmis à au moins un actionneur, ledit ordre étant déterminé par ledit module d'asservissement à partir d'au moins la deuxième commande de trajectoire et d'au moins une valeur courante dudit deuxième paramètre de vol.

Le deuxième objectif de pilotage peut être homogène à la l'évolution dynamique du deuxième paramètre de vol tenu par le pilote automatique.

Par exemple, le pilote automatique peut tenir un profil de la vitesse longitudinale sol Vxsol. La loi de pilotage par objectifs peut alors permettre de contrôler directement l'évolution dynamique de la vitesse longitudinale sol Vxsol. La commande de trajectoire sur l'axe longitudinal comporte alors une composante égale à la somme de l'évolution dynamique de la vitesse générée automatiquement par le pilote automatique, et de l'évolution dynamique générée par le pilote. Le pilote a ainsi la possibilité de modifier, éventuellement proportionnellement à son action sur son organe de commande, la trajectoire suivie.

Autre exemple, lors de l'acquisition automatique d'un cap sélecté, le pilote automatique peut tenir un profil de taux de virage. La loi de pilotage par objectifs peut alors permettre de contrôler l'évolution dynamique du cap.

L'étape de génération d'une deuxième commande de pilotage automatique peut comprendre les mêmes étapes que l'étape de génération d'une première commande de pilotage automatique

Selon un autre aspect, l'étape de génération d'une deuxième commande de pilotage humain peut comporter les étapes suivantes :

- transformation de la deuxième consigne pilote en une valeur de consigne humaine d'une dérivée seconde du deuxième paramètre de vol, une première composante de la deuxième commande de pilotage humain étant matérialisée par cette valeur de consigne humaine d'une dérivée seconde du deuxième paramètre de vol,
- établissement d'une valeur de consigne humaine d'une dérivée première du deuxième paramètre de vol par intégration de ladite valeur de consigne humaine d'une dérivée seconde du deuxième paramètre de vol, une deuxième composante de la deuxième commande de pilotage humain étant matérialisée par cette valeur de consigne humaine d'une dérivée première du deuxième paramètre de vol.

L'étape de transformation de la deuxième consigne pilote en une valeur de consigne humaine d'une dérivée seconde du deuxième paramètre de vol est par exemple réalisée par application d'un filtre passe bas du premier ordre.

Par exemple, l'étape de transformation de la deuxième consigne de pilotage en une valeur de consigne humaine de la dérivée seconde du deuxième paramètre de vol est réalisée par application de la relation suivante :

$$\ddot{X}comp_n = \frac{\dot{X}pil - \dot{X}comp_{n-1}}{\tau p}$$

où « $\ddot{X}comp_n$ » représente la valeur de consigne humaine de la dérivée seconde du deuxième paramètre de vol au pas de calcul courant, « $\tau p$ » représente une constante de temps prédéterminée du filtre, « $\dot{X}pil$ » représente la deuxième consigne pilote, « $\dot{X}comp_{n-1}$ » représente la valeur de consigne humaine de la dérivée première du deuxième paramètre de vol au pas de calcul précédant le pas de calcul courant.

Eventuellement, le giravion comprenant un manche mobile selon une direction dite « direction longitudinale » d'avant en arrière et de l'arrière vers l'avant, le manche étant mobile selon une direction dite « direction transversale » de gauche à droite et de droite à gauche, ladite première consigne pilote peut être établie en manœuvrant ledit manche selon l'une desdites directions et ladite deuxième consigne pilote est établie en manœuvrant ledit manche selon la direction qui n'est pas associée à la première consigne pilote.

Selon un autre aspect, un objectif de pilotage peut être homogène à l'évolution dynamique d'un paramètre de vol, et un autre objectif peut être homogène à ce paramètre de vol.

Selon un exemple, un objectif de tenue d'une vitesse latérale sol et un objectif de tenue d'une vitesse longitudinale sol sont tenus par le pilote automatique selon le procédé de l'invention. Dès lors, un pilote peut manœuvrer un organe de commande selon la direction longitudinale pour optimiser la trajectoire suivie en agissant sur l'accélération longitudinale de l'aéronef en appliquant le deuxième type d'interfaçage, et selon une direction latérale pour optimiser la trajectoire suivie en agissant sur la vitesse latérale sol de l'aéronef en appliquant le premier type d'interfaçage.

Outre un procédé, l'invention vise un giravion appliquant ce procédé, selon la revendication 13.

L'invention et ses avantages apparaîtront avec plus de détails dans le cadre de la description qui suit avec des exemples donnés à titre illustratif en référence aux figures annexées qui représentent :

- la figure 1, un schéma représentant un giravion selon l'invention,

- la figure 2, un schéma présentant une unité de traitement mettant en œuvre le procédé selon l'invention,

- la figure 3, un schéma illustrant un générateur de commande de modes de tenue automatique de trajectoire de l'unité de traitement,

- les figures 4 et 6, des schémas illustrant des générateurs de commande de pilotage humain de l'unité de traitement,

- les figures 5 et 7, des schémas illustrant des interfaçages, et

- les figures 8 à 11 des schémas illustrant des exemples d'utilisation de l'invention.

Les éléments présents dans plusieurs figures distinctes sont affectés d'une seule et même référence.

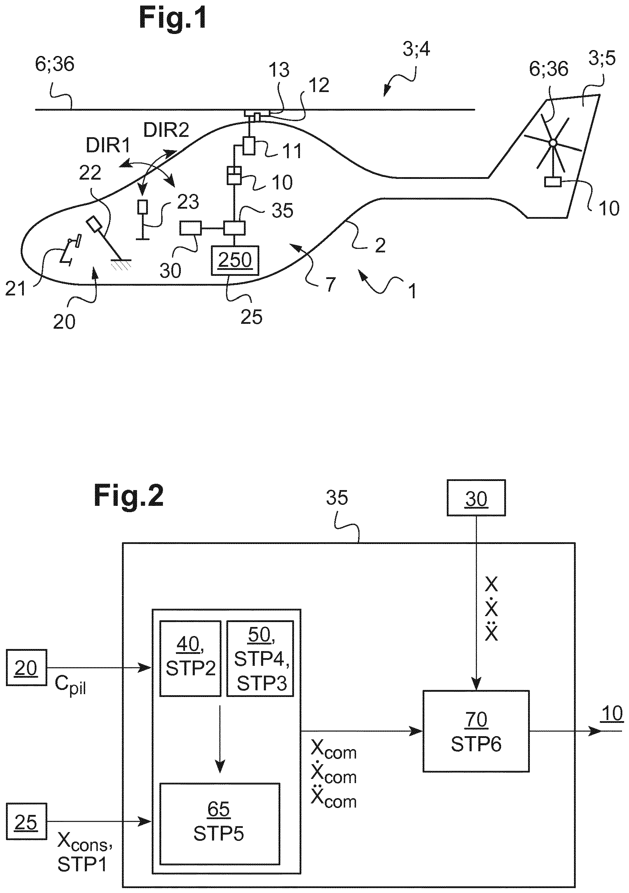

La figure 1 présente un giravion 1 selon l'invention. Ce giravion comprend un fuselage 2 et au moins un rotor 3 muni d'une pluralité de pales 6. Par exemple, le fuselage 2 porte un rotor principal 4 qui participe à la sustentation et à la propulsion du giravion, ainsi qu'un rotor arrière 5 qui participe au contrôle du mouvement en lacet du giravion.

Les pales 6 représentent des organes de manœuvre 36 qui sont mobiles pour contrôler le déplacement du giravion dans l'espace. A cet effet, le giravion comporte des actionneurs 10 aptes à induire un déplacement des organes de manœuvre 36, et en particulier une modification du pas des pales. Un tel actionneur 10 est par exemple relié à un distributeur hydraulique d'une servocommande, cette servocommande pilotant le pas de pales de manière usuelle.

A titre illustratif, le rotor principal 4 peut comprendre un ensemble de plateaux cycliques 12 relié à chaque pale de ce rotor principal 4 par une bielle de pas 13. De plus, au moins trois servocommandes 11 sont articulées à l'ensemble de plateaux cycliques, chaque servocommande 11 étant commandée par un ou plusieurs actionneurs 10.

Un tel actionneur peut par exemple prendre la forme d'un vérin électrique commandé par le biais d'un signal.

Pour qu'un pilote puisse piloter le giravion 1, ce giravion 1 comprend un système de commande de vol 7.

Ce système de commande de vol 7 est muni d'organes de commande 20 de vol. Pour des modes de vol classiques, ces organes de commande de vol peuvent inclure par exemple un levier 22 contrôlant collectivement le pas des pales du rotor principal, un manche 23 contrôlant cycliquement le pas des pales du rotor principal et un palonnier 21 contrôlant le pas des pales du rotor arrière. Le manche 23 est en particulier mobile selon une direction dite « direction longitudinale DIR1 » d'avant en arrière et selon une direction dite « direction transversale DIR2 » de gauche à droite, les termes gauche, droit, avant, et arrière étant à considérer au regard du pilote manœuvrant le manche.

Par ailleurs, le système de commande de vol 7 comporte une unité de traitement 35 apte à commander les actionneurs 10.

Sur un giravion à commande mécanique, les organes de commande peuvent déplacer des chaînes mécaniques intégrant lesdits actionneurs, l'unité de traitement 35 commandant les actionneurs 10. Sur un giravion à commande électrique, les organes de commande peuvent induire la génération de signaux transmis à l'unité de traitement 35, l'unité de traitement 35 commandant les actionneurs 10.

L'unité de traitement 35 peut comprendre par exemple au moins un processeur, au moins un circuit intégré, au moins un système programmable, au moins un circuit logique, ces exemples ne limitant pas la portée donnée à l'expression « unité de traitement ».

L'unité de traitement 35 est en outre reliée par des connections filaires ou non filaires à un système de mesure 30. Ce système de mesure 30 comporte au moins un capteur mesurant la valeur d'un paramètre de vol. L'expression « capteur » est à interpréter au sens large, ce terme pouvant couvrir un capteur en tant que tel ou encore un dispositif de mesure tel qu'une centrale inertielle par exemple. Le système de mesure peut comporter au moins un capteur de vitesse mesurant les composantes longitudinale et latérale de la vitesse de l'aéronef, ainsi que les valeurs de dérivées premières et de dérivées secondes de ces composantes. Le système de mesure peut comprendre des équipements présents usuellement sur un aéronef, et notamment sur un giravion.

De plus, l'unité de traitement 35 peut être reliée à un générateur de consigne 25 qui génère des consignes de pilotage automatique. Ce générateur de consigne 25 peut prendre la forme d'une interface 250 manœuvrable par un pilote humain pour paramétrer lesdites consignes.

Dès lors, un pilote peut agir sur les évolutions du giravion en manœuvrant les organes de commande 20 et/ou en engageant des modes de pilotage automatique via l'interface 250.

Selon l'invention, l'unité de traitement 35 peut élaborer les ordres transmis aux actionneurs 10, notamment pour modifier l'état de l'actionneur. Ces ordres sont élaborés à partir de lois de pilotage intégrées à l'unité de traitement 35 à partir des commandes générées par les organes de commande 20 du pilote, à partir des consignes issues de l'interface 250 avec des modes de tenue de trajectoire automatique sur les différents axes de pilotage incluant des modes supérieurs de pilotage automatique, ainsi qu'à partir des mesures issues du système de mesure 30 du giravion.

Sur un giravion, les différents axes de pilotage incluent un axe de pilotage longitudinal en tangage et un axe de pilotage transversal en roulis qui sont pilotés en agissant sur le pas cyclique des pales du rotor principal, un axe de pilotage en lacet qui est piloté en agissant sur le pas collectif des pales du rotor arrière, et un axe de pilotage vertical qui est piloté en agissant sur le pas collectif des pales du rotor principal.

En référence à la figure 2, l'unité de traitement 35 peut être décomposée en plusieurs blocs fonctionnels. Chaque bloc peut être matérialisé par un calculateur à part entière, ou peut représenter une partie d'un calculateur telle qu'une partie d'un code mémorisé ou d'un circuit logique par exemple.

Ainsi, l'unité de traitement 35 comporte un générateur de commande de modes de tenue automatique de trajectoire 40. Ce sous-ensemble vise à émettre des commandes de pilotage automatique pour tenir une trajectoire. Le générateur de commande de modes de tenue automatique de trajectoire 40 représente le pilote automatique du système.

De plus, l'unité de traitement 35 comporte un générateur de commande de pilotage humain 50. Ce sous-ensemble émet des commandes en fonction de l'action d'un pilote humain sur un organe de commande 20.

Le générateur de commande de pilotage humain 50 et le générateur de commande de modes de tenue automatique de trajectoire 40 sont indépendants l'un de l'autre, mais restent fonctionnels simultanément, en mode piloté comme en mode lâché. L'expression « mode piloté » fait référence à une phase où un pilote agit sur un organe de commande 20 pour contrôler la trajectoire suivie, et l'expression « mode lâché » fait référence à une phase où un pilote n'agit pas sur un organe de commande 20.

En outre, l'unité de traitement 35 comporte un générateur de commande de trajectoire 65. Le générateur de commande de trajectoire 65 est relié au générateur de commande de modes de tenue automatique de trajectoire 40 et au générateur de commande de pilotage humain 50. Dès lors, le générateur de commande de trajectoire 65 émet des commandes de trajectoire en fonction des ordres du pilote automatique transmis par le générateur de commande de modes de tenue automatique de trajectoire 40 et des ordres du pilote humain transmis par le générateur de commande de pilotage humain 50 .

L'unité de traitement 35 comporte enfin un module d'asservissement 70, par exemple du type d'un correcteur usuel. Ce module d'asservissement 70 est relié au générateur de commande de trajectoire 65 ainsi qu'à au moins un voire à chaque actionneur 10 et au système de mesure 30.

Ce système permet de contrôler l'aéronef en fonction d'au moins un objectif.

Le procédé appliqué par ce système selon le schéma de la figure 2 met ainsi en œuvre pour au moins un premier type d'interfaçage les étapes suivantes à chaque pas de calcul.

Durant une étape de génération d'une première consigne de trajectoire STP1, une première consigne de trajectoire représentant une valeur à atteindre par un premier paramètre de vol est émise. Par exemple, un pilote manœuvre en vol l'interface 250 pour spécifier la première consigne de trajectoire à respecter.

Dès lors, le générateur de commande de modes de tenue automatique de trajectoire 40 met en œuvre une étape de génération automatique d'une première commande de pilotage automatique STP2. Le générateur de commande de modes de tenue automatique de trajectoire 40 se charge d'élaborer une première commande de pilotage automatique à partir de la première consigne de trajectoire en appliquant un premier modèle mathématique de pilotage automatique prédéterminé.

La trajectoire de l'aéronef peut être définie par la mesure du premier paramètre de vol X, et de ses dérivées successives X et X sur les différents axes (longitudinal et/ou latéral et/ou vertical).

Ainsi, la première commande de pilotage automatique peut comprendre au moins une première composante Xcoma associée à une valeur de consigne automatique d'une dérivée seconde du premier paramètre de vol, une deuxième composante Xcoma associée à une valeur de consigne automatique d'une dérivée première du premier paramètre de vol, et une troisième composante Xcoma associée à une valeur de consigne automatique du premier paramètre de vol.

Durant une étape de génération d'une première consigne pilote STP3, un déplacement Cpil d'un organe de commande est transformé par le générateur de commande de pilotage humain 50 en une première consigne pilote Xpil, en appliquant un premier modèle de pilotage par objectif.

Durant une étape de génération d'une première commande de pilotage humain STP4, le générateur de commande de pilotage humain 50 élabore une première commande de pilotage humain à partir de la première consigne pilote en appliquant un premier modèle mathématique de pilotage humain prédéterminé.

Pour un premier type d'interfaçage, la première consigne pilote et le premier paramètre de vol sont homogènes en étant exprimés dans une même unité de mesure et en ayant trait au même paramètre. Pour le premier type d'interfaçage , la première commande de pilotage humain peut comprendre au moins une première composante Xcomp associée à une valeur de consigne humaine d'une dérivée seconde du premier paramètre de vol, une deuxième composante Xcomp associée à une valeur de consigne humaine d'une dérivée première du premier paramètre de vol, et une troisième composante Xcomp associée à une valeur de consigne humaine du premier paramètre de vol.

Durant une étape de génération d'une commande de trajectoire STP5, le générateur de commande de trajectoire 65 élaborant la première commande de trajectoire en combinant ladite première commande de pilotage automatique et ladite première commande de pilotage humain.

Par exemple, lors d'un interfaçage entre une loi de pilotage par objectifs associée à une commande de décalage du premier paramètre de vol X et aux modes automatiques de tenue de ce premier paramètre de vol X, les composantes de la première commande de pilotage automatique Xcoma, Xcoma et Xcoma sont sommées respectivement aux composantes correspondantes de la première commande de pilotage humain Xcomp, $\dot{X}$comp et $\ddot{X}$comp par l'intermédiaire de sommateurs pour élaborer trois composantes de la première commande de trajectoire Xcom, $\dot{X}$com et Xcom. Dans ce type d'interfaçage :

$$\text{Xcom} = \text{Xcoma} + \text{Xcomp}$$

$$\dot{X}\text{com} = \dot{X}\text{coma} + \dot{X}\text{comp}$$

$$\ddot{X}com = \ddot{X}coma + \ddot{X}comp$$

Durant une étape de commande STP6, le module d'asservissement 70 génère au moins un ordre à donner à au moins un actionneur 10 en fonction des valeurs courantes mesurées des composantes de la première commande de trajectoire, pour par exemple faire bouger un arbre de sortie de l'actionneur par rapport à un corps de l'actionneur.

Par ailleurs, le système peut tenir en parallèle un deuxième objectif. Ce deuxième objectif peut être tenu en appliquant le premier type d'interfaçage, ou un deuxième type d'interfaçage.

Selon ce deuxième type d'interfaçage, une deuxième consigne de trajectoire Ycons à respecter par un deuxième paramètre de vol est émise durant une étape de génération d'une deuxième consigne de trajectoire.

Dès lors, le générateur de commande de modes de tenue automatique de trajectoire 40 met en œuvre une étape de génération automatique d'une deuxième commande de pilotage automatique. Le générateur de commande de modes de tenue automatique de trajectoire 40 se charge d'élaborer une deuxième commande de pilotage automatique à partir de la deuxième consigne de trajectoire en appliquant un deuxième modèle mathématique de pilotage automatique prédéterminé. L'étape de génération automatique d'une deuxième commande de pilotage automatique peut être identique à l'étape de génération automatique d'une première commande de pilotage automatique précédemment décrite.

Par ailleurs, la deuxième commande de pilotage automatique peut comprendre au moins une première composante $\ddot{Y}coma$ associée à une valeur de consigne automatique d'une dérivée seconde du deuxième paramètre de vol, une deuxième composante $\dot{Y}coma$ associée à une valeur de consigne automatique d'une dérivée première du deuxième paramètre de vol, et une troisième composante Ycoma associée à une valeur de consigne automatique du deuxième paramètre de vol.

Durant une étape de génération d'une deuxième consigne pilote, un déplacement d'un organe de commande est transformé par le générateur de commande de pilotage humain 50 en une deuxième consigne pilote Ypil, en appliquant un deuxième modèle de pilotage par objectif.

Durant une étape de génération d'une deuxième commande de pilotage humain, le générateur de commande de pilotage humain 50 élabore une deuxième commande de pilotage humain à partir de la deuxième consigne pilote en appliquant un deuxième modèle mathématique de pilotage humain prédéterminé.

Pour un deuxième type d'interfaçage, la deuxième consigne pilote et la dérivée première du deuxième paramètre de vol sont homogènes en étant exprimées dans une même unité de mesure. La deuxième consigne pilote et le deuxième paramètre de vol n'ont pas trait à la même entité. Pour le deuxième type d'interfaçage, la deuxième commande de pilotage humain comprend une troisième composante nulle, une deuxième composante $\dot{Y}comp$, associée à une valeur de consigne humaine d'une dérivée première du deuxième paramètre de vol, et une première composante $\ddot{Y}comp$ associée à une valeur de consigne humaine d'une dérivée seconde du deuxième paramètre de vol

Durant une étape de génération d'une commande de trajectoire, le générateur de commande de trajectoire 65 élabore la commande de trajectoire en combinant ladite deuxième commande de pilotage automatique et ladite deuxième commande de pilotage humain.

Par exemple, les composantes de la deuxième commande de pilotage automatiques $\dot{Y}coma$ $\ddot{Y}coma$ sont sommées respectivement aux composantes correspondantes de la deuxième commande de pilotage humain $\dot{Y}comp$ et $\ddot{Y}comp$ par l'intermédiaire de sommateurs pour élaborer les composantes de la commande de trajectoire sur un axe de pilotage soit :

$$Ycom = \int \dot{Y}com$$

$$\dot{Y}com = \dot{Y}coma + \dot{Y}comp$$

$$\ddot{Y}com = \ddot{Y}coma + \ddot{Y}comp$$

Le générateur de commande de pilotage humain 50 permet ainsi d'influer sur le fonctionnement dynamique du générateur de commande de modes de tenue automatique de trajectoire 40. Le générateur de commande de pilotage humain 50 et le générateur de commande de modes de tenue automatique de trajectoire 40 sont interconnectés, et restent fonctionnels simultanément en mode piloté comme en mode lâché.

Durant l'étape de commande STP6, le module d'asservissement 70 génère au moins un ordre à donner à au moins un actionneur 10 en fonction des valeurs courantes mesurées des composantes de la commande de trajectoire.

Dès lors, un pilote peut par exemple tenir deux objectifs distincts en parallèle. Par exemple, la première consigne pilote est établie en manœuvrant le manche 23 selon une direction DIR1 ou DIR2 et en utilisant le premier type d'interfaçage. La deuxième consigne pilote est alors établie en manœuvrant ce manche 23 selon l'autre direction et en utilisant le deuxième type d'interfaçage.

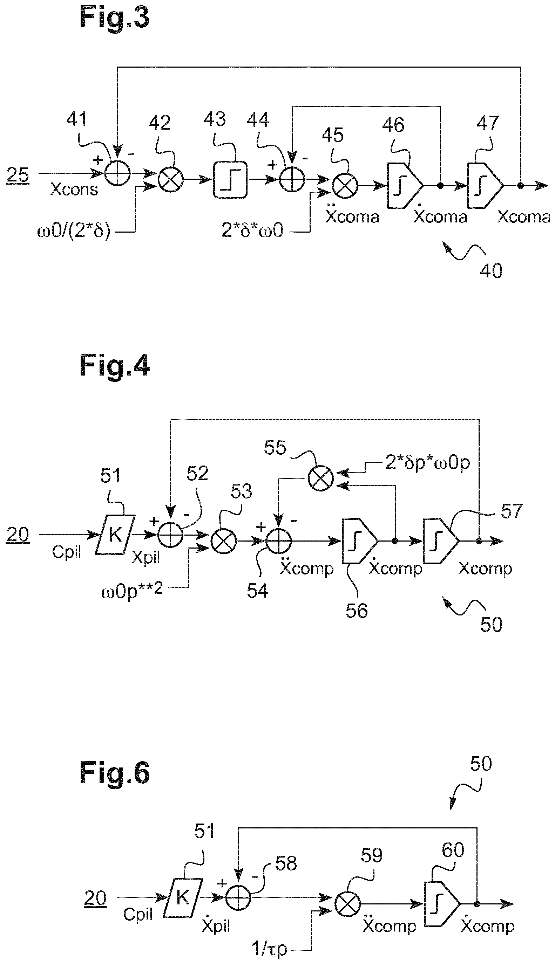

La figure 3 détaille un exemple de générateur de commande de modes de tenue automatique de trajectoire 40. La figure 3 illustre le fonctionnement du générateur de commande de modes de tenue automatique de trajectoire 40 utilisé dans le cadre du premier type d'interfaçage. Toutefois, ce même générateur de commande de modes de tenue automatique de trajectoire 40 peut être utilisé dans le cadre du deuxième type d'interfaçage

Ce générateur de commande de modes de tenue automatique de trajectoire 40 peut utiliser un filtre passe bas du deuxième ordre pour déterminer une valeur de consigne automatique de la dérivée seconde du paramètre de vol concerné, et peut borner cette valeur de consigne automatique. Dès lors, les autres composantes de la commande de pilotage automatique sont obtenues par intégration.

Ainsi, un différentiateur 41 soustrait à la consigne de trajectoire Xcons la valeur de consigne automatique du paramètre de vol calculée au précédant pas de calcul. Le résultat de cette différence est multiplié par un multiplicateur 42 par une constante égale au quotient de la fréquence de coupure $\omega 0$ du filtre divisé par le double de l'amortissement $\delta$ du filtre. Le résultat de ce produit est borné par un limiteur 43. Dès lors, un différenciateur 44 soustrait au produit borné la valeur de consigne automatique de la dérivée première du paramètre de vol concerné déterminée au pas de calcul précédent. La valeur de consigne automatique de la dérivée seconde de la première commande de trajectoire est alors fournie par un multiplicateur 45 qui multiplie le résultat de cette différence par le double du produit de la fréquence de coupure œ0et de l'amortissement $\delta$.

Un premier intégrateur 46 permet d'en déduire la valeur de consigne automatique de la dérivée première du paramètre de vol concerné, et un second intégrateur 47 permet d'en déduire la valeur de consigne automatique du paramètre de vol concerné.

Dès lors, la troisième composante de la commande de pilotage automatique est alors égale à la valeur de consigne automatique du paramètre de vol. La deuxième composante de la commande de pilotage automatique est égale à la valeur de consigne automatique de la dérivée première du paramètre de vol. La première composante de la commande de pilotage automatique est égale à la valeur de consigne automatique de la dérivée seconde du paramètre de vol.

La figure 4 décrit un exemple de générateur de commande de pilotage humain 50 permettant de contrôler directement à travers l'organe de commande des décalages du paramètre de vol contrôlés sur un ou plusieurs axes au travers d'un premier type d'interfaçage.

Pour cela, un mouvement Cpil d'un organe de commande peut représenter une mesure de la déflection que le pilote exerce sur son organe de commande. Ce mouvement Cpil est traduit en consigne pilote Xpil à travers un modèle de pilotage par objectif 51.

Similairement au mode de tenue automatique, le générateur de commande de pilotage humain 50 élabore les composantes d'une première commande de pilotage humain Xcomp, Xcomp et Xcomp à partir de la consigne pilote Xpil à travers un filtre du deuxième ordre.

Ainsi, un différentiateur 52 soustrait à la consigne pilote Xpil la valeur de consigne humaine du premier paramètre de vol calculée au précédant pas de calcul. Le résultat de cette différence est multiplié par un multiplicateur 53 par une constante égale au carré de la fréquence de coupure $\omega 0 p$ du filtre pour obtenir un premier produit. En parallèle, un multiplicateur 55 détermine un deuxième produit en multipliant le double du produit de la fréquence de coupure $\omega 0$ p et de l'amortissement $\delta p$ du filtre par la valeur de consigne humaine de la dérivée première du premier paramètre de vol déterminée au pas de calcul précédent. Dès lors, un différenciateur 54 soustrait le deuxième produit au premier produit pour obtenir la valeur de consigne de la dérivée seconde du premier paramètre de vol.

Un deuxième intégrateur 56 permet d'en déduire la valeur de consigne humaine de la dérivée première du premier paramètre de vol, et un troisième intégrateur 57 permet d'en déduire la valeur de consigne humaine du premier paramètre de vol.

Dès lors, la troisième composante de la commande de pilotage humain est alors égale à la valeur de consigne humaine du paramètre de vol. La deuxième composante de la commande de pilotage humain est égale à la valeur de consigne humaine de la dérivée du paramètre de vol. La première composante de la commande de pilotage humain est égale à la valeur de consigne humaine de la dérivée seconde du paramètre de vol.

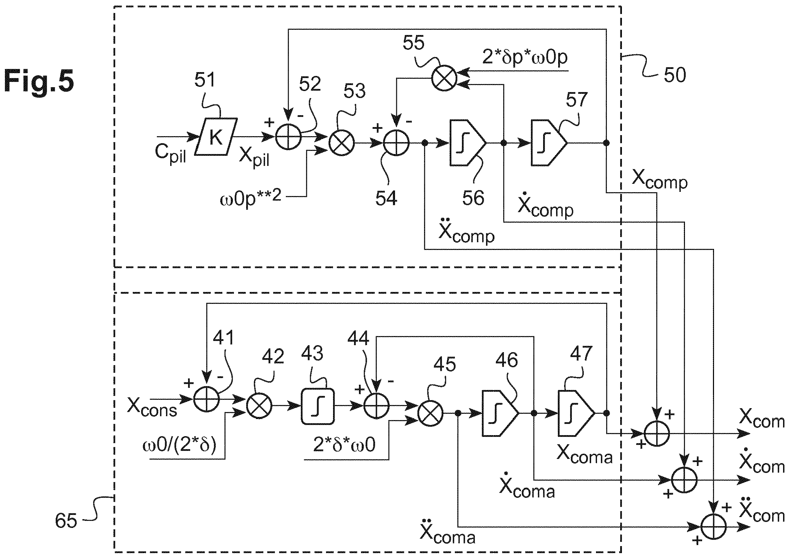

La figure 5 illustre un interfaçage entre une loi de pilotage par objectifs associée à une commande de décalage du premier paramètre de vol X et aux modes automatiques de tenue de ce premier paramètre de vol X. Les composantes de la première commande de pilotage automatique Xcoma, Xcoma et Xcoma sont sommées respectivement aux composantes correspondantes de la première commande de pilotage humain Xcomp, Xcomp et Xcomp par l'intermédiaire de sommateurs pour élaborer trois composantes de la commande de trajectoire Xcom, Xcom et Xcom.

La figure 6 décrit un exemple de générateur de commande de pilotage humain 50 permettant de contrôler directement à travers l'organe de commande 20 la dérivée première du paramètre de vol contrôlé sur un ou plusieurs axes, selon un deuxième objectif de pilotage relatif à un deuxième paramètre de vol via un deuxième type d'interfaçage.

Pour cela, un mouvement Cpil d'un organe de commande peut représenter une mesure de la déflection que le pilote exerce sur son organe de commande. Ce mouvement Cpil est traduit en consigne pilote $\dot{X}pil$ à travers un modèle de pilotage par objectif 51.

Un différentiateur 58 soustrait à la consigne pilote $\dot{X}pil$ la valeur de consigne humaine de la dérivée première du deuxième paramètre de vol au précédant pas de calcul. Le résultat de cette différence est multiplié par un multiplicateur 59 par une constante égale à l'inverse de la constante de temps prédéterminée du filtre pour obtenir la valeur de consigne humaine de la dérivée seconde du deuxième paramètre de vol. Un intégrateur 60 permet d'en déduire la valeur de consigne humaine de la dérivée première du deuxième paramètre de vol.

Dès lors, la troisième composante de la commande de pilotage humain est nulle. La deuxième composante de la commande de pilotage humain est égale à la valeur de consigne humaine de la dérivée première du deuxième paramètre de vol. La première composante de la commande de pilotage humain est égale à la valeur de consigne humaine de la dérivée seconde du deuxième paramètre de vol.

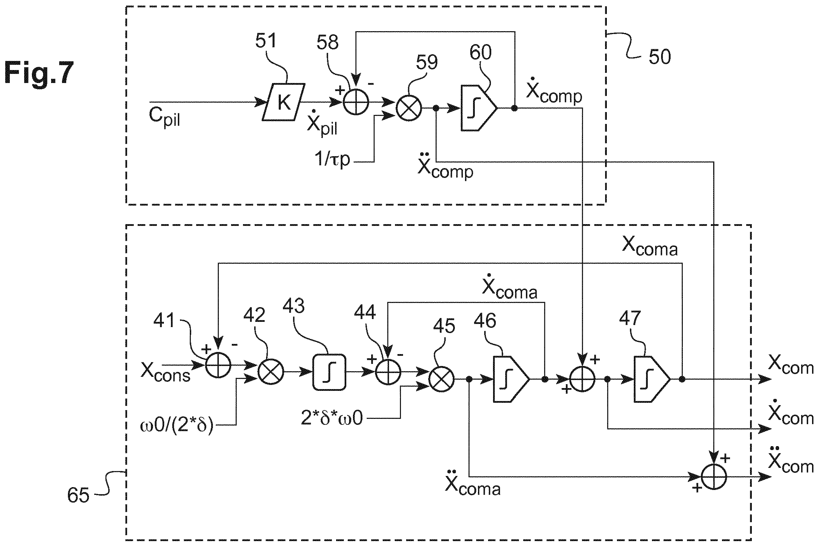

La figure 7 illustre un exemple de deuxième interfaçage. Les composantes de la deuxième commande de pilotage automatique $\dot{X}coma$ et $\ddot{X}coma$ sont sommées respectivement aux composantes correspondantes de la deuxième commande de pilotage humain $\dot{X}comp$ et $\ddot{X}comp$ par l'intermédiaire de sommateurs pour élaborer une deuxième composante $\dot{X}com$ et une première composante $\ddot{X}com$ de la commande de trajectoire sur un axe de pilotage. Une troisième composante Xcom est obtenue par intégration de la deuxième composante $\dot{X}com$ de la commande de trajectoire.

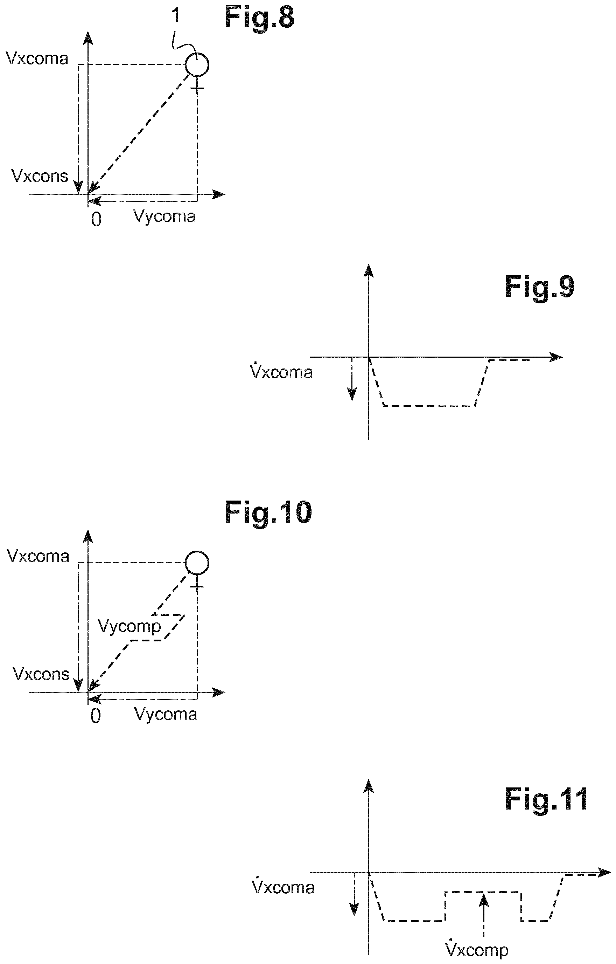

Les figures 8 à 11 permettent d'illustrer l'invention sur la base d'un exemple. Selon cet exemple, un mode supérieur est engagé pour faciliter la phase finale d'une approche en faisant décélérer l'aéronef 1 jusqu'à l'obtention d'une consigne de vitesse sol suffisamment basse au voisinage du point d'atterrissage, de façon à rallier ensuite le point de posé à allure réduite dans de bonnes conditions opérationnelles. Le mode supérieur engagé va permettre l'acquisition d'une consigne de vitesse sol longitudinale Vxcons, par exemple de 40 x 0,514444 m/s (i.e. 40 nœuds), et d'une consigne de vitesse sol latérale nulle en contrôlant cycliquement le pas des pales du rotor principal.

La figure 8 illustre les variations de vitesse requises, et la figure 9 illustre la décélération permettant d'obtenir ces variations de vitesse.

Sur l'axe latéral, il peut être intéressant de décaler latéralement l'axe d'approche au cours de la décélération pour orienter précisément le giravion vers le point d'atterrissage, tout en continuant la décélération. Pour ce faire, on introduit un générateur de commandes par objectifs de type TRC (Translational Rate Command) sur l'axe latéral de l'aéronef que l'on interface avec le mode de mise en vol stationnaire automatique.

Sur l'axe longitudinal, il peut être intéressant de pouvoir doser le taux de décélération automatique pour gérer notamment la distance de décélération. Pour ce faire, on introduit un générateur de commandes par objectifs de type ACC (AcCeleration Command) sur l'axe longitudinal de l'aéronef que l'on interface avec le mode de mise en vol stationnaire automatique.

Dès lors, le procédé peut permettre de tenir un objectif de vitesse latérale via le premier type d'interfaçage, en laissant la possibilité à un pilote d'agir sur cette vitesse latérale en manœuvrant par exemple le manche 23 latéralement.

En référence à la figure 10, la manœuvre du manche de gauche à droite, et inversement, induit la création d'une première commande de pilotage humain combinée à une première commande de pilotage automatique. La première commande de pilotage humain est conditionnée par le déplacement du manche, alors que la première commande de pilotage automatique est conditionnée par la première consigne de trajectoire de vitesse latérale nulle. Le procédé permet ainsi de décaler la valeur de la vitesse latérale sans altérer la dynamique de mise à 0 de cette vitesse latérale Le procédé peut permettre de tenir en plus un objectif de vitesse longitudinale via un deuxième type d'interfaçage, en laissant la possibilité à un pilote d'agir sur la dérivée première de cette vitesse longitudinale en manœuvrant par exemple le manche 23 longitudinalement.

En référence à la figure 11, la manœuvre du manche longitudinalement induit la création d'une deuxième commande de pilotage humain combinée à une deuxième commande de pilotage automatique. La deuxième commande de pilotage humain est conditionnée par le déplacement du manche, alors que la deuxième commande de pilotage automatique est conditionnée par la deuxième consigne de trajectoire de vitesse longitudinale à 40 x 0,514444 m/s (i.e. 40 nœuds). Le procédé permet de gérer l'évolution dynamique de la consigne de vitesse longitudinale du mode de tenue automatique.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Procédé de mise en œuvre d'un système de commande de vol (7) pour contrôler une trajectoire d'un giravion (1) à commande électrique, ledit giravion (1) comprenant au moins un organe de manœuvre (36) aérodynamique mobile pour contrôler un déplacement du giravion (1), ledit giravion (1) comprenant au moins un actionneur (10) pour déplacer ledit organe de manœuvre (36), ce système de commande de vol (7) comprenant un organe de commande (20) de vol manœuvrable par un pilote humain et une unité de traitement (35) apte à commander ledit au moins un actionneur (10), ce procédé étant **caractérisé en ce qu'**à chaque itération et pour au moins un premier type d'interfaçage :

   - une étape de génération d'une première consigne de trajectoire (STP1) par un générateur de consigne (25), la première consigne de trajectoire représentant une valeur à atteindre par un premier paramètre de vol,
   - une étape de génération automatique d'une première commande de pilotage automatique (STP2) par l'unité de traitement (35) à partir de ladite première consigne de trajectoire en appliquant un premier modèle mathématique de pilotage automatique prédéterminé,
   - une étape de génération d'une première consigne pilote (STP3) par l'unité de traitement (35) durant laquelle un déplacement dudit organe de commande (20) est transformé par un premier modèle de pilotage par objectif en une première consigne pilote, ladite première consigne pilote et le premier paramètre de vol étant homogènes en étant exprimés dans une même unité de mesure,
   - une étape de génération d'une première commande de pilotage humain (STP4) par l'unité de traitement (35) à partir de la première consigne pilote en appliquant un premier modèle mathématique de pilotage humain prédéterminé,
   - une étape de génération d'une première commande de trajectoire (STP5) par l'unité de traitement (35) en combinant ladite première commande de pilotage automatique et ladite première commande de pilotage humain,
   - une étape de commande (STP6) pour commander au moins ledit actionneur durant laquelle au moins un ordre est transmis par l'unité de traitement (35) audit actionneur, ledit ordre étant déterminé par un module d'asservissement (70) de l'unité de traitement (35) à partir d'au moins la première commande de trajectoire et d'au moins une valeur courante dudit premier paramètre de vol.

2. Procédé selon la revendication 1,
   **caractérisé en ce que** ladite première consigne de trajectoire est paramétrée par un pilote humain.

3. Procédé selon l'une quelconque des revendications 1 à 2,
   **caractérisé en ce que** :

   - ladite première commande de pilotage automatique comprend au moins une première composante associée à une dérivée seconde du premier paramètre de vol, une deuxième composante associée à une dérivée première du premier paramètre de vol, et une troisième composante associée au premier paramètre de vol,
   - ladite première commande de pilotage humain comprend au moins une première composante associée à une dérivée seconde du premier paramètre de vol, une deuxième composante associée à une dérivée première du premier paramètre de vol, et une troisième composante associée au premier paramètre de vol,
   - ladite première commande de trajectoire comprend au moins une première composante combinant la première composante de la première commande de pilotage automatique et la première composante de la première commande de pilotage humain, une deuxième composante combinant la deuxième composante de la première commande de pilotage automatique et la deuxième composante de la première commande de pilotage humain, et une troisième composante combinant la troisième composante de la première commande de pilotage automatique et la troisième composante de la première commande de pilotage humain,
   - ledit ordre étant déterminé par le module d'asservissement (70) à partir d'au moins la première commande de trajectoire et d'au moins une valeur courante dudit premier paramètre de vol, une valeur courante de la dérivée première du premier paramètre de vol et une valeur courante de la dérivée seconde du premier paramètre de vol.

4. Procédé selon l'une quelconque des revendications 1 à 3,
   **caractérisé en ce que** l'étape de génération automatique d'une première commande de pilotage automatique comporte les étapes suivantes :

   - transformation de la première consigne de trajectoire en une valeur de consigne automatique d'une dérivée seconde du premier paramètre de vol par application du premier modèle mathématique de pilotage automatique, une première composante de la première commande de pilotage automatique étant matérialisée par cette valeur de consigne automatique d'une dérivée seconde du premier paramètre de vol,
- établissement d'une valeur de consigne automatique d'une dérivée première du premier paramètre de vol par intégration de ladite valeur de consigne automatique d'une dérivée seconde du premier paramètre de vol, une deuxième composante de la première commande de pilotage automatique étant matérialisée par cette valeur de consigne automatique d'une dérivée première du premier paramètre de vol,
- établissement d'une valeur de consigne automatique dudit premier paramètre de vol par intégration de ladite valeur de consigne automatique d'une dérivée première du premier paramètre de vol, une troisième composante de la première commande de pilotage automatique étant matérialisée par cette valeur de consigne automatique du premier paramètre de vol.

5. Procédé selon la revendication 4,
**caractérisé en ce que** l'étape de transformation de la première consigne de trajectoire en une valeur de consigne automatique d'une dérivée seconde du premier paramètre de vol est réalisée par application d'un filtre passe bas du deuxième ordre.

6. Procédé selon la revendication 5,
**caractérisé en ce que** l'étape de génération automatique d'une première commande de pilotage automatique comporte une étape de bornage de la valeur de consigne automatique d'une dérivée seconde du premier paramètre de vol.

7. Procédé selon l'une quelconque des revendications 1 à 6,
**caractérisé en ce que** l'étape de génération d'une commande de pilotage humain comporte les étapes suivantes :

- transformation de la première consigne pilote en une valeur de consigne humaine d'une dérivée seconde du premier paramètre de vol, une première composante de la première commande de pilotage humain étant matérialisée par cette valeur de consigne humaine d'une dérivée seconde du premier paramètre de vol,
- établissement d'une valeur de consigne humaine d'une dérivée première du premier paramètre de vol par intégration de ladite valeur de consigne humaine d'une dérivée seconde du premier paramètre de vol, une deuxième composante de la première commande de pilotage humain étant matérialisée par cette valeur de consigne humaine d'une dérivée première du premier paramètre de vol,
- établissement d'une valeur de consigne humaine du premier paramètre de vol par intégration de ladite valeur de consigne humaine d'une dérivée première du premier paramètre de vol, une troisième composante de la première commande de pilotage humain étant matérialisée par cette valeur de consigne humaine du premier paramètre de vol.

8. Procédé selon la revendication 7,
**caractérisé en ce que** l'étape de transformation de la première consigne pilote en une valeur de consigne humaine d'une dérivée seconde du premier paramètre de vol est réalisée par application d'un filtre passe bas du deuxième ordre.

9. Procédé selon l'une quelconque des revendications 1 à 8, **caractérisé en ce que** pour au moins un deuxième type d'interfaçage, ledit procédé comporte :

- une étape de génération d'une deuxième consigne de trajectoire, la deuxième consigne de trajectoire représentant une valeur à atteindre par un deuxième paramètre de vol,
- une étape de génération automatique d'une deuxième commande de pilotage automatique à partir de ladite deuxième consigne de trajectoire en appliquant un deuxième modèle mathématique de pilotage automatique prédéterminé,
- une étape de génération d'une deuxième consigne pilote durant laquelle un déplacement dudit organe de commande est transformé par un deuxième modèle de pilotage par objectif en une deuxième consigne pilote, ladite deuxième consigne pilote et une dérivée première du deuxième paramètre de vol étant homogènes en étant exprimées dans une même unité de mesure,
- une étape de génération d'une deuxième commande de pilotage humain à partir de la deuxième consigne pilote en appliquant un deuxième modèle mathématique de pilotage humain prédéterminé,
- une étape de génération d'une deuxième commande de trajectoire en combinant ladite deuxième commande de pilotage automatique et ladite deuxième commande de pilotage humain,
- une étape de commande pour commander au moins un dit actionneur durant laquelle au moins un ordre est transmis à au moins un actionneur, ledit ordre étant déterminé par ledit module d'asservissement (70) à partir d'au moins la deuxième commande de trajectoire et d'au moins une valeur courante dudit deuxième paramètre de vol.

10. Procédé selon la revendication 9,
   **caractérisé en ce que** l'étape de génération d'une deuxième commande de pilotage humain comporte les étapes suivantes :

   - transformation de la deuxième consigne pilote en une valeur de consigne humaine d'une dérivée seconde du deuxième paramètre de vol, une première composante de la deuxième commande de pilotage humain étant matérialisée par cette valeur de consigne humaine d'une dérivée seconde du deuxième paramètre de vol,
   - établissement d'une valeur de consigne humaine d'une dérivée première du deuxième paramètre de vol par intégration de ladite valeur de consigne humaine d'une dérivée seconde du deuxième paramètre de vol, une deuxième composante de la deuxième commande de pilotage humain étant matérialisée par cette valeur de consigne humaine d'une dérivée première du deuxième paramètre de vol.

11. Procédé selon la revendication 10,
   **caractérisé en ce que** l'étape de transformation de la deuxième consigne pilote en une valeur de consigne humaine d'une dérivée seconde du deuxième paramètre de vol est réalisée par application d'un filtre passe bas du premier ordre.

12. Procédé selon l'une quelconque des revendications 9 à 11,
   **caractérisé en ce que** le giravion (1) comprenant un manche (23) mobile selon une direction dite « direction longitudinale (DIR1) » d'avant en arrière et d'arrière en avant, le manche étant mobile selon une direction dite « direction transversale (DIR2) » de gauche à droite et de droite à gauche, ladite première consigne pilote est établie en manœuvrant ledit manche (23) selon l'une desdites directions (DIR1, DIR2) et ladite deuxième consigne pilote est établie en manœuvrant ledit manche (23) selon l'autre direction qui n'est pas associée à la première consigne pilote.

13. Giravion (1) á commande électrique muni d'un système de commande de vol (7) pour contrôler une trajectoire de ce giravion (1), ledit giravion (1) comprenant au moins un organe de manœuvre (36) aérodynamique mobile pour contrôler un déplacement de ce giravion (1), ledit giravion (1) comprenant au moins un actionneur (10) pour déplacer ledit organe de manœuvre (36), ce système de commande de vol (7) comprenant un organe de commande de vol (20) manœuvrable par un pilote humain ,
   **caractérisé en ce que** ledit giravion met en œuvre le procédé selon l'une quelconque des revendications 1 à 12, ledit giravion comportant :

   - un générateur de consigne (25) qui met en œuvre l'étape de génération d'une première consigne de trajectoire, et
   - une unité de traitement (35) comportant :

      - un générateur de commande de modes de tenue automatique de trajectoire (40) qui met en œuvre l'étape de génération automatique d'une première commande de pilotage automatique,
      - un générateur de commande de pilotage humain (50) qui met en œuvre l'étape de génération d'une première consigne pilote et l'étape de génération d'une première commande de pilotage humain
      - un générateur de commande de trajectoire (65) relié au générateur de commande de modes de tenue automatique de trajectoire (40) et au générateur de commande de pilotage humain (50), le générateur de commande de trajectoire (65) mettant en œuvre l'étape de génération d'une commande de trajectoire, et
      - un module d'asservissement (70) relié au générateur de commande de trajectoire ainsi qu'audit actionneur et à au moins un capteur mesurant une donnée relative à une trajectoire à suivre, ledit au moins un capteur comprenant un capteur mesurant une valeur courante dudit premier paramètre de vol, ledit module d'asservissement mettant en œuvre l'étape de commande.

**Patentansprüche**

1. Verfahren zum Betreiben eines Flugsteuerungssystems (7) zum Steuern einer Flugbahn eines elektrisch gesteuerten Drehflügelflugzeugs (1), wobei das Drehflügelflugzeug (1) mindestens ein bewegliches aerodynamisches Manövrierelement (36) zum Steuern einer Bewegung des Drehflügelflugzeugs (1) aufweist, wobei das Drehflügelflugzeug (1) mindestens einen Aktuator (10) zum Bewegen des Manövrierelements (36) aufweist, wobei das Flugsteuerungssystem (7) ein von einem menschlichen Piloten bedienbares Flugsteuerungselement (20) und eine Verarbeitungseinheit (35) umfasst, die eingerichtet ist, den mindestens einen Aktuator (10) zu steuern, wobei das Verfahren **dadurch gekennzeichnet ist, dass** bei jeder Iteration und für mindestens eine erste Art der Kopplung :

- einen Schritt des Erzeugens eines ersten FlugbahnSollwertes (STP1) durch einen Sollwertgenerator (25), wobei der erste Flugbahn-Sollwert einen Wert darstellt, der von einem ersten Flugparameter erreicht werden soll,
- einen Schritt des automatischen Erzeugens eines ersten Autopilotbefehls (STP2) durch die Verarbeitungseinheit (35) aus dem ersten Flugbahn-Sollwert durch Anwendung eines vorgegebenen ersten mathematischen Autopilotmodells,
-- einen Schritt des Erzeugens eines ersten Vorsteuersollwerts (STP3) durch die Verarbeitungseinheit (35), während dessen eine Bewegung des Steuerungselements (20) durch ein erstes Zielsteuerungsmodell in einen ersten Vorsteuersollwert umgewandelt wird, wobei der erste Vorsteuersollwert und der erste Flugparameter insofern homogen sind, als sie in einer gleichen Maßeinheit ausgedrückt werden,
- einen Schritt des Erzeugens eines ersten menschlichen Steuerungsbefehls (STP4) durch die Verarbeitungseinheit (35) aus dem ersten Vorsteuersollwert durch Anwenden eines vorgegebenen ersten mathematischen Modells der menschlichen Steuerung,
- einen Schritt des Erzeugens eines ersten Flugbahnbefehls (STP5) durch die Verarbeitungseinheit (35) durch Kombinieren des ersten Autopilotbefehls und des ersten menschlichen Steuerbefehls,
- einen Steuerschritt (STP6) zum Steuern mindestens des Aktuators, während dessen mindestens eine Anweisung von der Verarbeitungseinheit (35) an den Aktuator übertragen wird, wobei die Anweisung von einem Servomodul (70) der Verarbeitungseinheit (35) auf der Grundlage mindestens des ersten Flugbahnbefehls und mindestens eines aktuellen Werts des ersten Flugparameters bestimmt wird.

2. Verfahren nach Anspruch 1,
   **dadurch gekennzeichnet, dass** der erste Flugbahnsollwert von einem menschlichen Piloten parametriert wird.

3. Verfahren nach einem der Ansprüche 1 bis 2, **dadurch gekennzeichnet, dass** :

   - der erste Autopilotsteuerbefehl mindestens eine erste Komponente, die mit einer zweiten Ableitung des ersten Flugparameters verknüpft ist, eine zweite Komponente, die mit einer ersten Ableitung des ersten Flugparameters verknüpft ist, und eine dritte Komponente, die mit dem ersten Flugparameter verknüpft ist, umfasst,
   - die erste menschliche Steuerbefehl mindestens eine erste Komponente, die mit einer zweiten Ableitung des ersten Flugparameters verknüpft ist, eine zweite Komponente, die mit einer ersten Ableitung des ersten Flugparameters verknüpft ist, und eine dritte Komponente, die mit dem ersten Flugparameter verknüpft ist, umfasst,
   - der erste Flugbahnbefehl mindestens eine erste Komponente, die die erste Komponente des ersten Autopilotsteuerbefehls und die erste Komponente des ersten menschlichen Steuerbefehls kombiniert, eine zweite Komponente, die die zweite Komponente des ersten Autopilotsteuerbefehls und die zweite Komponente des ersten menschlichen Steuerbefehls kombiniert, und eine dritte Komponente, die die dritte Komponente des ersten Autopilotsteuerbefehls und die dritte Komponente des ersten menschlichen Steuerbefehls kombiniert, umfasst,
   - wobei die Anweisung durch das Servomodul (70) aus mindestens dem ersten Flugbahnbefehl und mindestens einem aktuellen Wert des ersten Flugparameters, einem aktuellen Wert der ersten Ableitung des ersten Flugparameters und einem aktuellen Wert der zweiten Ableitung des ersten Flugparameters bestimmt wird.

4. Verfahren nach einem der Ansprüche 1 bis 3,
   **dadurch gekennzeichnet, dass** der Schritt des automatischen Erzeugens eines ersten Autopilotsteuerbefehls die folgenden Schritte umfasst:

   - Umwandeln des ersten Flugbahnsollwertes in einen automatischen Sollwert einer zweiten Ableitung des ersten Flugparameters durch Anwendung des ersten mathematischen Autopilotmodells, wobei eine erste Komponente des ersten Autopilotsteuerbefehls durch diesen automatischen Sollwert von einer zweiten Ableitung des ersten Flugparameters materialisiert wird,
   - Festlegen eines automatischen Sollwerts einer ersten Ableitung des ersten Flugparameters durch Integration des automatischen Sollwerts einer zweiten Ableitung des ersten Flugparameters, wobei eine zweite Komponente des ersten Autopilotsteuerbefehls durch diesen automatischen Sollwert von einer ersten Ableitung des ersten Flugparameters realisiert wird,

- Festlegen eines automatischen Sollwerts des ersten Flugparameters durch Integration des automatischen Sollwerts einer ersten Ableitung des ersten Flugparameters, wobei eine dritte Komponente des ersten Autopilotsteuerbefehls durch diesen automatischen Sollwert vom ersten Flugparameter realisiert wird.

5. Verfahren nach Anspruch 4,
**dadurch gekennzeichnet, dass** der Schritt des Umwandelns des ersten Flugbahnsollwerts in einen automatischen Sollwert einer zweiten Ableitung des ersten Flugparameters durch Anwendung eines Tiefpassfilters zweiter Ordnung durchgeführt wird.

6. Verfahren nach Anspruch 5,
**dadurch gekennzeichnet, dass** der Schritt des automatischen Erzeugens eines ersten Autopilotsteuerbefehls einen Schritt des Begrenzens des automatischen Sollwerts einer zweiten Ableitung des ersten Flugparameters umfasst.

7. Verfahren nach einem der Ansprüche 1 bis 6,
**dadurch gekennzeichnet, dass** der Schritt des Erzeugens eines menschlichen Steuerbefehls die folgenden Schritte umfasst:

- Umwandeln des ersten Vorsteuersollwertes in einen menschlichen Sollwert einer zweiten Ableitung des ersten FlugParameters, wobei eine erste Komponente des ersten menschlichen Steuerbefehls durch diesen menschlichen Sollwert einer zweiten Ableitung des ersten Flugparameters materialisiert wird,
- Festlegen eines menschlichen Sollwertes einer ersten Ableitung des ersten Flugparameters durch Integration des genannten menschlichen Sollwertes einer zweiten Ableitung des ersten Flugparameters, wobei eine zweite Komponente des ersten menschlichen Steuerbefehls durch diesen menschlichen Sollwert einer ersten Ableitung des ersten Flugparameters materialisiert wird,
- Festlegen eines menschlichen Sollwertes des ersten Flugparameters durch Integration des genannten menschlichen Sollwertes einer ersten Ableitung des ersten Flugparameters, wobei eine dritte Komponente des ersten menschlichen Steuerbefehls durch diesen menschlichen Sollwert des ersten Flugparameters materialisiert wird.

8. Verfahren nach Anspruch 7,
**dadurch gekennzeichnet, dass** der Schritt des Umwandelns des ersten Vorsteuersollwerts in einen menschlichen Sollwert einer zweiten Ableitung des ersten Flugparameters durch Anwendung eines Tiefpassfilters zweiter Ordnung durchgeführt wird.

9. Verfahren nach einem der Ansprüche 1 bis 8,
**dadurch gekennzeichnet, dass** das Verfahren für mindestens eine zweite Art der Kopplung umfasst:

- einen Schritt des Erzeugens eines zweiten FlugbahnSollwertes, wobei der zweite Flugbahn-Sollwert einen Wert darstellt, der von einem zweiten Flugparameter erreicht werden soll,
- einen Schritt des automatischen Erzeugens eines zweiten Autopilotbefehls aus dem zweiten Flugbahn-Sollwert durch An-wendung eines vorgegebenen zweiten mathematischen Autopilotmodells,
- einen Schritt des Erzeugens eines zweiten Vorsteuersollwerts, während dessen eine Bewegung des Steuerungselements durch ein zweites Zielsteuerungsmodell in einen zweiten Vorsteuersollwert umgewandelt wird, wobei der zweite Vorsteuersollwert und eine erste Ableitung des zweiten Flugparameters insofern homogen sind, als sie in der gleichen Maßeinheit ausgedrückt werden,
- einen Schritt des Erzeugens eines zweiten menschlichen Steuerungsbefehls aus dem zweiten Vorsteuersollwert durch Anwenden eines vorgegebenen zweiten mathematischen Modells der menschlichen Steuerung,
- einen Schritt des Erzeugens eines zweiten Flugbahnbefehls durch Kombinieren des zweiten Autopilotbefehls und des zweiten menschlichen Steuerbefehls,
- einen Steuerschritt zum Steuern mindestens eines der Aktuatoren, während dessen mindestens eine Anweisung an mindestens einen Aktuator übertragen wird, wobei die Anweisung von dem Servomodul (70) auf der Grundlage mindestens des zweiten Flugbahnbefehls und mindestens eines aktuellen Werts des zweiten Flugparameters bestimmt wird.

10. Verfahren nach Anspruch 9,
**dadurch gekennzeichnet, dass** der Schritt des Erzeugens eines zweiten menschlichen Steuerbefehls die folgenden Schritte umfasst:

**EP 3 336 649 B1**

- Umwandeln des zweiten Vorsteuersollwertes in einen menschlichen Sollwert einer zweiten Ableitung des zweiten Flugparameters, wobei eine erste Komponente des zweiten menschlichen Steuerbefehls durch diesen menschlichen Sollwert einer zweiten Ableitung des zweiten Flugparameters materialisiert wird,
- Festlegen eines menschlichen Sollwertes einer ersten Ableitung des zweiten Flugparameters durch Integration des genannten menschlichen Sollwertes einer zweiten Ableitung des zweiten Flugparameters, wobei eine zweite Komponente des zweiten menschlichen Steuerbefehls durch diesen menschlichen Sollwert einer ersten Ableitung des zweiten Flugparameters materialisiert wird.

**11.** Verfahren nach Anspruch 10,
**dadurch gekennzeichnet, dass** der Schritt des Umwandelns des zweiten Vorsteuersollwerts in einen menschlichen Sollwert einer zweiten Ableitung des zweiten Flugparameters durch Anwendung eines Tiefpassfilters erster Ordnung durchgeführt wird.

**12.** Verfahren nach einem der Ansprüche 9 bis 11,
**dadurch gekennzeichnet, dass** das Drehflügelflugzeug (1) einen Steuerknüppel (23) aufweist, der in einer sogenannten "Längsrichtung (DIR1) " von vorne nach hinten und von hinten nach vorne beweglich ist, wobei der Steuerknüppel in einer sogenannten "Querrichtung (DIR2)" von links nach rechts und von rechts nach links beweglich ist, der erste Vorsteuer-Sollwert durch Betätigen des Steuerknüppels (23) in einer der Richtungen (D1R1, DIR2) festgelegt wird und der zweite Vorsteuer-Sollwert durch Betätigen des Steuerknüppels (23) in der anderen Richtung, die nicht dem ersten Vorsteuer-Sollwert zugeordnet ist, festgelegt wird.

**13.** Elektrisch gesteuertes Drehflügelflugzeug (1), das mit einem Flugsteuerungssystem (7) zur Steuerung einer Flugbahn des Drehflügelflugzeugs (1) ausgestattet ist, wobei das Drehflügelflugzeug (1) mindestens ein bewegliches aerodynamisches Manövrierelement (36) zum Steuern einer Bewegung des Drehflügelflugzeugs (1) aufweist, wobei das Drehflügelflugzeug (1) mindestens einen Aktuator (10) zum Bewegen des Manövrierelements (36) aufweist, wobei das Flugsteuerungssystem (7) ein von einem menschlichen Piloten bedienbares Flugsteuerungselement (20) aufweist,
**dadurch gekennzeichnet, dass** das Drehflügelflugzeug das Verfahren nach einem der Ansprüche 1 bis 12 durchführt, wobei das Drehflügelflugzeug umfasst:

- einen Sollwertgenerator (25), der den Schritt des Erzeugens eines ersten Flugbahn-Sollwertes verwirklicht; und
- eine Verarbeitungseinheit (35) mit :

- einem Generator (40) zum Steuern von automatischen Flugbahnhaltemodi, der den Schritt des automatischen Erzeugens eines ersten Autopilotbefehls durchführt,
- einem menschlichen Steuerbefehlsgenerator (50), der den Schritt des Erzeugens eines ersten Vorsteuersollwerts und den Schritt des Erzeugens eines ersten menschlichen Steuerbefehls ausführt,
- einem Flugbahnbefehlsgenerator (65), der mit dem Generator (40) zum Steuern von automatischen Flugbahnhaltemodi und dem menschlichen Steuerbefehlsgenerator (50) verbunden ist, wobei der Flugbahnbefehlsgenerator (65) den Schritt des Erzeugens eines Flugbahnbefehls ausführt, und
- einem Servomodul (70), das mit dem Generator zur Steuerung der Flugbahn sowie mit dem genannten Aktuator und mit mindestens einem Sensor verbunden ist, der Daten bezüglich einer zu verfolgenden Flugbahn misst, wobei der genannte mindestens eine Sensor einen Sensor umfasst, der einen aktuellen Wert des genannten ersten Flugparameters misst, wobei das Servomodul den Schritt des Steuerns ausführt.

**Claims**

**1.** Method of implementing a flight control system (7) for controlling a path of an electrically controlled rotorcraft (1), said rotorcraft (1) comprising at least one movable aerodynamic manoeuvring member (36) for controlling a movement of the rotorcraft (1), said rotorcraft (1) comprising at least one actuator (10) for moving said manoeuvring member (36), this flight control system (7) comprising a flight control member (20) movable by a human pilot and a processor unit (35) suitable for controlling said at least one actuator (10), this method being **characterised in that** on each iteration and for at least a first type of interfacing

- a step of generating a first path setpoint (STP1) by a setpoint generator (25), the first path setpoint representing a value to be reached by a first flight parameter;
- a step of automatically generating a first autopilot command (STP2) by the processor unit (35) from the first path setpoint by applying a first predetermined autopilot mathematical model;
- a step of generating a first pilot setpoint (STP3) by the processor unit (35) during which a movement of said control member (20) is transformed by a first piloting-by-target model into a first pilot setpoint, said first pilot setpoint and the first flight parameter being homogenous **in that** they are expressed in the same measurement unit;
- a step of generating a first human pilot command (STP4) by the processor unit (35) from the first pilot setpoint by applying a first predetermined human piloting mathematical model;
- a step of generating a first path command (STP5) by the processor unit (35) by combining said first autopilot command and said first human pilot command; and
- a control step (STP6) for controlling at least said actuator, during which at least one order is transmitted by the processor unit (35) to said actuator, said order being determined by a servo-control module (70) of the processor unit (35) from at least the first path command and at least a current value of said first flight parameter.

2. Method according to claim 1, **characterised in that** said first path setpoint is set by a human pilot.

3. Method according to either claim 1 or 2, **characterised in that**

- said first autopilot command comprises at least a first component associated with a second derivative of the first flight parameter, a second component associated with a first derivative of the first flight parameter, and a third component associated with the first flight parameter;
- said first human pilot command comprises at least a first component associated with a second derivative of the first flight parameter, a second component associated with a first derivative of the first flight parameter, and a third component associated with the first flight parameter;
- said first path command comprises at least a first component combining the first component of the first autopilot command and the first component of the first human pilot command, a second component combining the second component of the first autopilot command and the second component of the first human pilot command, and a third component combining the third component of the first autopilot command and the third component of the first human pilot command;
- said order being determined by the servo-control module (70) on the basis of at least the first path command and at least a current value of said first flight parameter, a current value of the first derivative of the first flight parameter, and a current value of the second derivative of the first flight parameter.

4. Method according to any one of claims 1 to 3, **characterised in that** the step of automatically generating a first autopilot command comprises the following steps:

- transforming the first path setpoint into an automatic setpoint value for a second derivative of the first flight parameter by applying the first autopilot mathematical model, a first component of the first autopilot command being represented by this automatic setpoint value for a second derivative of the first flight parameter;
- establishing an automatic setpoint value for a first derivative of the first flight parameter by integrating said automatic setpoint value for a second derivative of the first flight parameter, a second component of the first autopilot command being represented by this automatic setpoint value for a first derivative of the first flight parameter; and
- establishing an automatic setpoint value for said first flight parameter by integrating said automatic setpoint value for a first derivative of the first flight parameter, a third component of the first autopilot command being represented by this automatic setpoint value for the first flight parameter.

5. Method according to claim 4, **characterised in that** the step of transforming the first path setpoint into an automatic setpoint value for a second derivative of the first flight parameter is performed by applying a second-order lowpass filter.

6. Method according to claim 5, **characterised in that** the step of automatically generating a first autopilot command includes a step of bounding the automatic setpoint value for a second derivative of the first flight parameter.

7. Method according to any one of claims 1 to 6, **characterised in that** the step of generating a human pilot command comprises the following steps:

- transforming the first pilot setpoint into a human setpoint value for a second derivative of the first flight parameter, a first component of the first human pilot command being represented by this human setpoint value for a second derivative of the first flight parameter;

- establishing a human setpoint value for a first derivative of the first flight parameter by integrating said human setpoint value for a second derivative of the first flight parameter, a second component of the first human pilot command being represented by this human setpoint value for a first derivative of the first flight parameter; and

- establishing a human setpoint value for the first flight parameter by integrating the human setpoint value for a first derivative of the first flight parameter, a third component of the first human pilot command being represented by this human setpoint value for the first flight parameter.

8. Method according to claim 7, **characterised in that** the step of transforming the first pilot setpoint into a human setpoint value for a second derivative of the first flight parameter is performed by applying a second-order lowpass filter.

9. Method according to any one of claims 1 to 8, **characterised in that** for at least one second type of interfacing, the method comprises:

- a step of generating a second path setpoint, the second path setpoint representing a value to be reached by a second flight parameter;
- a step of automatically generating a second automatic pilot command from said second path setpoint by applying a second predetermined autopilot mathematical model;
- a step of generating a second pilot setpoint during which a movement of said control member is transformed by a second piloting-by-target model into the second pilot setpoint, said second pilot setpoint and a first derivative of the second flight parameter being homogenous **in that** they are expressed in the same measurement unit;
- a step of generating a second human pilot command from the second pilot setpoint by applying a second predetermined human piloting mathematical model;
- a step of generating a second path command by combining said second autopilot command and said second human pilot command; and
- a control step for controlling said at least one said actuator during which at least one order is transmitted to said at least one actuator, the order being determined by said servo-control module (70) on the basis of at least the second path command and of at least one current value of the second flight parameter.

10. Method according to claim 9, **characterised in that** the step of generating a second human pilot command comprises the following steps:

- transforming the second pilot setpoint into a human setpoint value for a second derivative of the second flight parameter, a first component of the second human pilot command being represented by this human setpoint value for a second derivative of the second flight parameter; and
- establishing a human setpoint value for a first derivative of the second flight parameter by integrating said human setpoint value for a second derivative of the second flight parameter, a second component of the second human pilot command being represented by this human setpoint value for a first derivative of the second flight parameter.

11. Method according to claim 10, **characterised in that** the step of transforming the second pilot setpoint into a human setpoint value for a second derivative of the second flight parameter is performed by applying a first-order lowpass filter.

12. Method according to any one of claims 9 to 11, **characterised in that** the rotorcraft (1) includes a stick (23) movable in what is referred to as a "longitudinal direction (DIR1)" from front to rear and from rear to front, the stick being movable in what is referred to as a "transverse direction (DIR2)"from left to right and from right to left, said first pilot setpoint is established by moving said stick (23) along one of the longitudinal and transverse directions (DIR1, DIR2), and said second pilot setpoint is established by moving said stick (23) along the other direction that is not associated with the first pilot setpoint.

13. Rotorcraft (1) having a flight control system (7) for controlling a path of this rotorcraft (1), said rotorcraft (1) having at least one aerodynamic manoeuvring member (36) that is movable to control a movement of this rotorcraft (1), said rotorcraft (1) including at least one actuator (10) for moving said manoeuvring member (36), this flight control system (7) including a flight control member (20) movable by a human pilot, **characterised in that** said rotorcraft implements the method according to any one of claims 1 to 12, said rotorcraft including:

- a setpoint generator (25) performing the step of generating a first path setpoint; and
- a processor unit (35) including:

    - a command generator for generating automatic path-holding modes (40) that implements the step of automatically generating a first autopilot command;
    - a human pilot command generator (50) that implements the step of generating a first pilot setpoint and the step of generating a first human pilot command;
    - a path command generator (65) connected to the command generator for generating automatic path-holding modes (40) and to the human pilot command generator (50), the path command generator (65) implementing the step of generating a path command; and
    - a servo-control module (70) connected to the path command generator and to said actuator and to at least one sensor measuring data relating to a path to be followed, said at least one sensor comprising a sensor measuring a current value of said first flight parameter, said servo-control module implementing the command step.

# Fig.1

# Fig.2

# Fig.3

# Fig.4

# Fig.6

Fig.5

# Fig.7

## Fig.8

Vxcoma

1

Vxcons

0    Vycoma

## Fig.9

V̇xcoma

## Fig.10

Vxcoma

Vycomp

Vxcons

0    Vycoma

## Fig.11

V̇xcoma

V̇xcomp

**EP 3 336 649 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2771071
- US 9308985 B

- US 3920966 A

**Littérature non-brevet citée dans la description**

- Evaluation on novel architecture for harmonizing manual and automatic flight controls under atmospheric turbulence. **ITOH ERI et al.** AEROSPCE SCIENCE AND TECHNOLOGY. ELSEVIER MASSON, 25 Novembre 2011, vol. 24